# FASCICULE DE BREVET EUROPEEN

(11) **EP 0 640 926 B1**
(45) Date de publication et mention de la délivrance du brevet: **07.11.2001**
(21) Numéro de dépôt: 94410068.4
(22) Date de dépôt: 29.08.1994
(51) Int. Cl.: G06F 13/364

(54) **Codeur de niveau de priorité**
Prioritätskodierer
Priority encoder

(30) Priorité: 31.08.1993 FR 9310576
(43) Date de publication de la demande: 01.03.1995
(73) Titulaire: STMicroelectronics S.A., 94250 Gentilly (FR)
(72) Inventeur: Chaisemartin, Philippe, F-38190 Sainte Agnes (FR)
(74) Mandataire: de Beaumont, Michel

(56) Documents cités:
- DE-A- 3 334 123
- DE-A- 4 024 029
- GB-A- 2 225 919
- IBM TECHNICAL DISCLOSURE BULLETIN, vol.29, no.3, Août 1986, ARMONK, NY, US pages 1361 - 1362 'ROUND ROBIN SELECTION DEVICE USING A FEEDBACK PRIORITY ENCODER'

## Description

La présente invention concerne un codeur de niveau de priorité qui est un circuit servant à acquitter la requête la plus prioritaire parmi un ensemble de requêtes arrivant sous forme de signaux actifs au codeur. L'acquittement d'une requête consiste à valider un circuit (souvent un microprocesseur) pour que ce dernier effectue la tâche correspondant à la requête.

Un codeur de niveau de priorité reçoit une ou plusieurs requêtes simultanées sur un ensemble de lignes de requête affectées de rangs respectifs, par exemple de 1 à n, et acquitte une seule requête à la fois par des lignes d'acquittement. Dans certains codeurs, les lignes d'acquittement correspondent directement aux lignes de requête et le codeur ne transmet sur les lignes d'acquittement que la seule requête acquittée. Dans d'autres codeurs, les lignes d'acquittement fournissent, sous forme binaire, le rang de la requête acquittée.

Il existe actuellement deux types de codeurs de niveau de priorité, l'un dit codeur linéaire et l'autre codeur circulaire.

Dans un codeur linéaire, les priorités affectées aux lignes de requête sont distinctes, les priorités étant par exemple affectées par ordre décroissant aux rangs des lignes de requête. Le codeur linéaire acquitte toujours la requête de rang le plus faible, et une requête de rang donné n'est pas acquittée tant qu'il subsiste des requêtes de rang inférieur.

Un codeur linéaire est classiquement constitué d'un circuit logique non-séquentiel, du type à propagation de retenue, qui acquitte la requête de rang le plus faible peu de temps (dépendant du délai de propagation de la retenue) après un changement quelconque des états des lignes de requête.

Dans un codeur circulaire, les lignes de requête sont affectées d'un même niveau de priorité. Un tel codeur doit garantir, si plusieurs requêtes sont actives en même temps, que chacune de ces requêtes soit acquittée à un moment donné.

Pour cela, un codeur circulaire classique est constitué d'un circuit logique séquentiel qui effectue une scrutation circulaire des lignes de requête à la cadence d'une horloge. A chaque cycle d'horloge, le circuit séquentiel scrute une ligne de requête. Si la ligne de requête scrutée est active, l'acquittement correspondant est envoyé, et la scrutation des lignes de requête se poursuit à partir de la dernière ligne scrutée. Lorsque la ligne de requête de dernier rang, n, est scrutée, la scrutation recommence à la ligne de requête de rang 1...

Ainsi, un inconvénient du codeur circulaire susmentionné, est qu'il ne traite qu'une ligne de requête par cycle d'horloge. En d'autres termes, si le circuit vient de scruter la ligne de rang i et que la requête active suivante est de rang j (j>i), la requête de rang j n'est acquittée que j-i cycles d'horloge après.

Un objet de la présente invention est de prévoir un codeur de niveau de priorité circulaire permettant d'acquitter des requêtes de rangs quelconques à des cycles d'horloge successifs.

Un autre objet de la présente invention est de prévoir un codeur de niveau de priorité mixte permettant, de façon programmable, de traiter une partie des requêtes en tant que requêtes de priorités distinctes (codage linéaire) et une autre partie des requêtes en tant que requêtes de priorité identique (codage circulaire), et ceci tout en acquittant une requête à chaque cycle d'horloge.

Ces objets sont atteints grâce à un codeur de niveau de priorité circulaire selon la revendication 1 comprenant : un codeur de niveau de priorité linéaire recevant une pluralité de requêtes de rangs 1 à n sur des lignes de requête correspondantes, et acquittant sur une sortie d'acquittement la requête de rang le plus faible parmi les requêtes qui lui parviennent ; un registre de masquage connecté pour ne transmettre au codeur linéaire que les requêtes dont les rangs sont déterminés par les rangs de bits actifs d'un masque contenu dans le registre de masquage ; et un circuit de génération de masque fournissant au registre de masquage un masque dont les bits de rang 1 à i (i = 1, 2... n) sont inactifs et les autres bits actifs lorsqu'une requête de rang i est acquittée par le codeur linéaire.

Selon un mode de réalisation de la présente invention, le registre de masquage comprend une entrée d'initialisation activée lorque la sortie d'acquittement du codeur linéaire est à zéro.

L'invention prévoit également un codeur de niveau de priorité mixte comprenant en outre des moyens pour forcer à un état actif des bits choisis des masques fournis par le générateur de masque.

Selon un mode de réalisation de la présente invention, le codeur comprend des moyens pour n'autoriser le chargement d'un masque dans le registre de masquage que si la requête acquittée correspond aux bits non forcés à un état actif des masques.

Ces objets, caractéristiques et avantages ainsi que d'autres de la présente invention seront exposés en détail dans la description suivante de modes de réalisation particuliers faite en relation avec les figures jointes parmi lesquelles :
la figure 1 représente un mode de réalisation de codeur de niveau de priorité circulaire selon la présente invention ;
la figure 2 illustre, à l'aide d'un chronogramme, le fonctionnement du codeur de la figure 1 ;
la figure 3 représente un mode de réalisation de codeur de niveau de priorité mixte selon la présente invention ; et
la figure 4 représente une variante du codeur de niveau de priorité mixte de la figure 3.

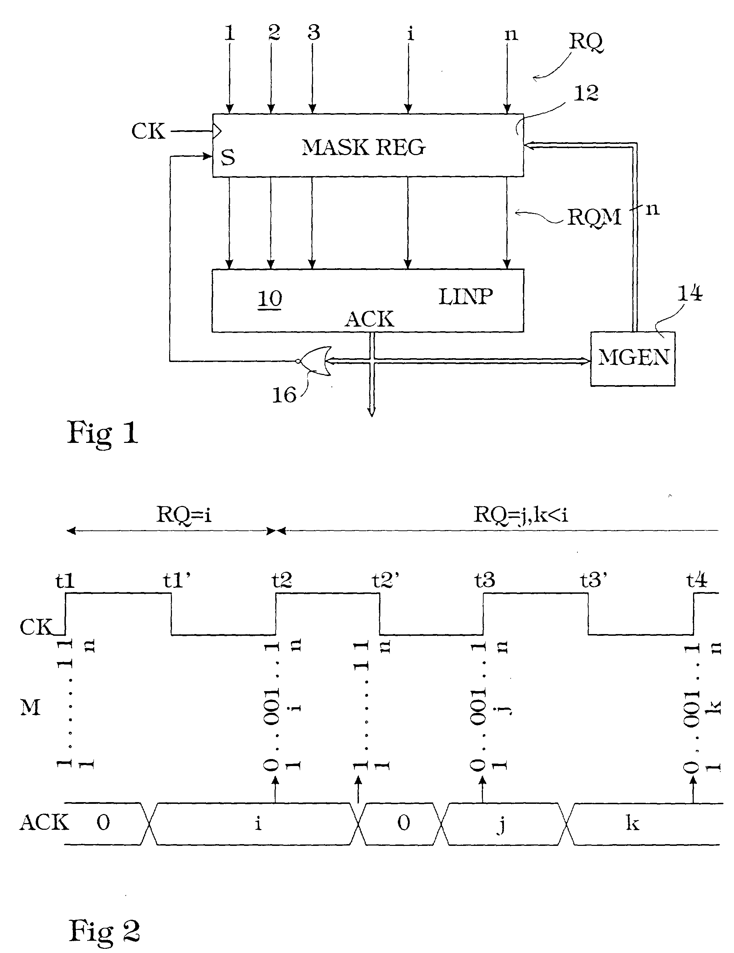

A la figure 1, un codeur de niveau de priorité circulaire selon l'invention comprend un codeur de niveau de priorité linéaire (LINP) 10. Ce codeur linéaire reçoit des lignes de requête de rangs 1 à n par l'intermédiaire d'un registre de masquage (MASK REG) 12. Les lignes de requête reliées à l'entrée du registre de masquage sont notées RQ, et celles reliées entre le registre de masquage et le codeur linéaire 10 sont notées RQM. La sortie d'acquittement ACK du codeur linéaire 10 est reliée à un générateur de masque (MGEN) 14 qui fournit un masque M au registre de masquage 12, qui est fonction du rang de la requête acquittée par le codeur linéaire 10.

Un masque M fourni par le générateur 14 comprend un bit associé à chaque ligne de requête RQ. Le registre de masquage 12 est tel qu'un état actif d'une ligne de requête RQ n'est transmis vers le codeur linéaire 10 que si le bit correspondant du masque est actif, par exemple à 1.

En outre, le registre de masquage 12 reçoit un signal d'horloge CK qui entraîne, à chaque front montant par exemple, la mémorisation des états des lignes de requête RQ et du masque M fourni par le générateur de masque 14. Le registre de masquage comprend une entrée de "mise à un" S asynchrone (c'est-à-dire qui, dès qu'elle est activée, met à 1 le masque contenu dans le registre de masquage). Cette entrée de mise à 1 est validée lorsque le codeur linéaire 10 n'a aucune requête à acquitter, c'est-à-dire lorsque sa sortie ACK est à 0. En pratique, la sortie ACK est fournie à une porte NON OU 16 dont la sortie est fournie à l'entrée de mise à 1 S du registre de masquage 12.

Le générateur de masque 14 est tel qu'il fournit un masque dont les bits de rangs 1 à i sont à 0 et les bits restants à 1 lorsque le codeur linéaire 10 acquitte la requête de rang i. Un tel générateur de masque peut être facilement réalisé par l'homme du métier à l'aide de portes logiques.

La figure 2 illustre, à l'aide d'un chronogramme, le fonctionnement du codeur circulaire selon l'invention. Cette figure représente l'allure du signal d'horloge CK, des masques M chargés dans le registre de masquage 12 et l'acquittement ACK de diverses requêtes. Des instants t1 à t4 désignent des fronts montants successifs de l'horloge CK et des instants t1' à t3' désignent les fronts descendants.

A l'instant t1, on charge dans le registre de masquage 12 un masque initial dont tous les bits sont à 1, et les états des lignes de requête RQ sont mémorisés dans ce registre. Le codeur linéaire 10 n'acquitte aucune requête, sa sortie ACK est à 0. Toutes les requêtes sur les lignes RQ sont transmises au codeur linéaire 10. On suppose que seule la ligne de rang i est active. Quelque temps après l'instant t1, par exemple au voisinage de l'instant t1' au front descendant de l'horloge CK, le codeur linéaire 10 acquitte la requête i. Dès cet acquittement, le générateur de masque 14 établit un masque M dont les bits de rangs 1 à i sont à 0 et les autres bits à 1.

A l'instant t2, le masque susmentionné établi par le générateur de masque 14 est chargé dans le registre de masquage 12 et les états des lignes de requête RQ sont mémorisés. Comme cela est indiqué sur le chronogramme de la figure 2, les lignes RQ présentent des nouvelles requêtes de rangs j et k (j<k) inférieurs au rang i. Toutefois, grâce au masque qui vient d'être chargé à l'instant t2, ces requêtes de rang j et k sont masquées ; le codeur linéaire 10 ne reçoit aucune requête. Au voisinage de l'instant t2', le codeur linéaire 10 fournit sur sa sortie d'acquittement ACK la valeur 0. Dès que la sortie d'acquittement passe à 0, le registre de masquage est mis à 1 par la porte 16, ce qui entraîne alors la transmission des requêtes de rang j et k vers le codeur linéaire 10. Ainsi, quelque temps après le passage à 0 de la sortie d'acquittement ACK, le codeur linéaire 10 acquitte la requête de rang j, le rang j étant inférieur au rang k. Le générateur de masque 14 établit alors un masque M dont les bits de rang 1 à j sont à 0 et les autres bits à 1.

A l'instant t3, ce nouveau masque est chargé dans le registre de masquage 12 et les nouvelles requêtes sur les lignes RQ sont mémorisées. Les requêtes de rang j et k sont toujours actives. Toutefois, la requête de rang j est maintenant masquée et ne parvient pas au codeur linéaire 10. Seulement la requête de rang k est transmise au codeur 10 qui acquitte cette requête au voisinage d'un instant t3'. Dès cet acquittement, le générateur de masque 14 établit un nouveau masque M dont les bits de rang 1 à k sont à 0 et les autres bits à 1...

Le chronogramme de la figure 2 montre que le circuit de la figure 1 fonctionne en tant que codeur de niveau de priorité circulaire qui présente l'avantage d'acquitter une requête active à chaque cycle d'horloge.

Les acquittements sont généralement pris en compte par d'autres circuits aux fronts montants de l'horloge CK. Ainsi, le passage à 0 de la sortie ACK entre les instants t2' et t3 est ignoré.

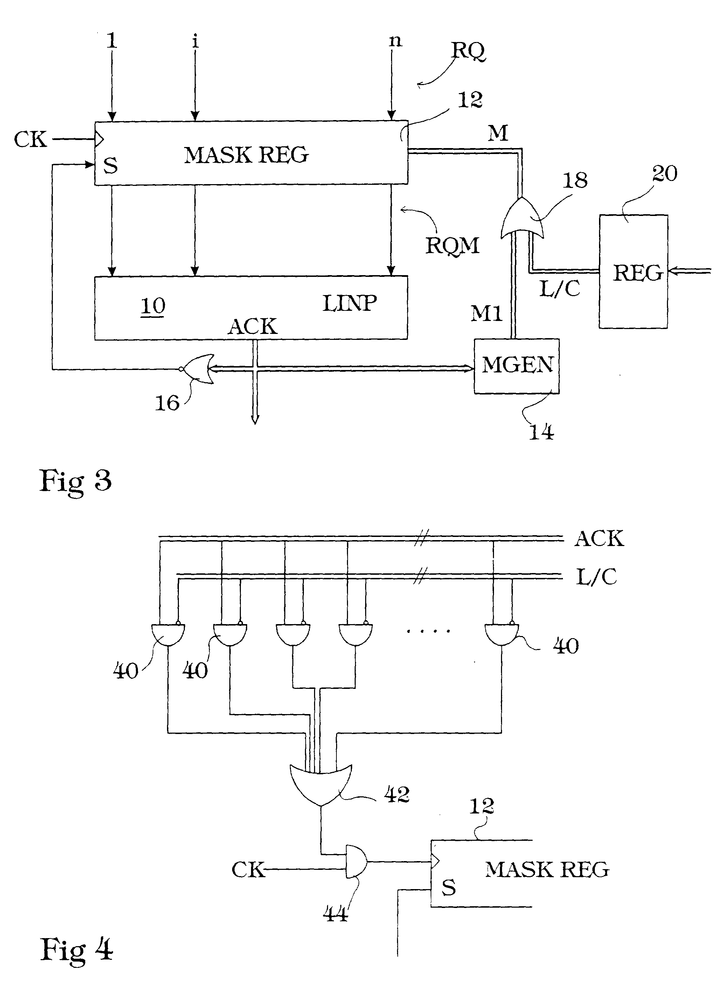

La figure 3 représente un mode de réalisation de codeur de niveau de priorité mixte selon la présente invention. Ce codeur permet de traiter les requêtes de rang faible en tant que requêtes de priorités distinctes (codage linéaire), et les requêtes de rang fort en tant que requêtes de priorité identique (codage circulaire). Dans cette figure, des mêmes éléments qu'à la figure 1 sont désignés par des mêmes références.

Par rapport au circuit de la figure 1, on a ajouté un ensemble de portes OU 18 recevant chacune un bit d'un registre (REG) 20 et un bit d'un masque M1 fourni par le générateur de masque 14. Les sorties des portes OU 18 fournissent le masque M au registre de masquage 12. Avec cette configuration, si un bit du registre 20 est à 1, le bit correspondant du masque M est toujours à 1, quel que soit le masque M1 fourni par le générateur de masque 14.

Un codeur de niveau de priorité étant généralement associé à un microprocesseur, on peut envisager que le registre 20 soit accessible en écriture par le microprocesseur, ce qui permet d'écrire des valeurs dans ce registre par programme.

Si l'on suppose que les bits de rang 1 à i du registre 20 sont à 1, les requêtes de rang 1 à i sont toujours transmises au codeur linéaire 10. Ainsi, les requêtes de rang 1 à i sont en permanence traitées de manière linéaire classique par le codeur linéaire 10, en tant que requêtes de priorités distinctes. Par contre, le générateur de masque 14 fonctionnant comme cela a été précédemment décrit, les requêtes restantes, de rangs i+l à n, sont traitées de manière circulaire.

En effet, tant qu'une requête de rang 1 à i est active, le codeur linéaire 10 acquitte la plus prioritaire parmi ces requêtes actives. Le générateur de masque 14 fournit à chacun de ces acquittements un masque dont les premiers bits sont à 0 mais qui sont forcés à 1 par les portes OU 18.

Par contre, s'il n'y a aucune requête de rang compris entre 1 et i, le circuit se comporte comme le circuit de la figure 1, c'est-à-dire de manière circulaire, pour des requêtes de rang supérieur à i.

La figure 4 représente un exemple de circuit logique ajouté au circuit de la figure 3, qui permet au codeur mixte selon l'invention de traiter les requêtes de manière circulaire ou linéaire selon des combinaisons quelconques déterminées par le registre 20.

L'exemple représenté correspond au cas où il y a autant de lignes d'acquittement ACK que de lignes de requête RQ. Chaque ligne d'acquittement ACK est reliée à une première entrée d'une porte ET respective 40. Chaque ligne L/C de sortie du registre 20 est reliée à une deuxième entrée, inverseuse, de la porte ET 40 correspondante. Les sorties des portes 40 sont reliées à une porte OU 42.

Avec cette configuration, la sortie de la porte 42 est active seulement quand une requête de priorité circulaire est acquittée. La sortie de cette porte 42 valide la transmission du signal d'horloge CK vers le registre de masquage 12 grâce à une porte ET 44. En conséquence, un nouveau masque M n'est chargé dans le registre de masquage 12 que si une requête de priorité circulaire est acquittée.

## Revendications

1. Codeur de niveau de priorité, comprenant :
- un codeur de niveau de priorité linéaire (10) recevant une pluralité de requêtes de rangs 1 à n sur des lignes de requête (RQM) correspondantes, et acquittant sur une sortie d'acquittement (ACK) la requête de rang le plus faible parmi les requêtes qui lui parviennent ;
- un registre de masquage (12) connecté pour ne transmettre au codeur linéaire (10) que les requêtes dont les rangs sont déterminés par les rangs de bits actifs d'un masque (M) contenu dans le registre de masquage ;
- un circuit de génération de masque (14) générant un masque dont les bits de rang 1 à i (i = 1, 3... n) sont inactifs et les autres bits actifs lorsqu'une requête de rang i est acquittée par le codeur linéaire ;
**caractérisé en ce qu'**il comprend des moyens (18, 20) pour forcer à un état actif des bits choisis des masques (M) fournis par le générateur de masque (14) et qu'il fourni ces masques modifiés au registre de masquage (12).

2. Codeur de niveau de priorité selon la revendication 1, **caractérisé en ce qu'**il comprend des moyens (40, 42, 44) pour n'autoriser le chargement d'un masque dans le registre de masquage (12) que si la requête acquittée correspond aux bits non forcés à un état actif des masques.

3. Codeur de niveau de priorité selon la revendication 1, **caractérisé en ce que** le registre de masquage (12) comprend une entrée d'initialisation (S) activée lorque la sortie d'acquittement (ACK) du codeur linéaire (10) est à zéro.

## Claims

1. A circular priority encoder including:
- a linear priority encoder (10) that receives a plurality of requests of ranks 1 to n on corresponding request lines (RQM), and acknowledges on an acknowledgment output (ACK) the request of the lowest rank among the requests that it receives;
- a mask register (12) connected so as to transmit to the linear encoder (10) only the requests whose ranks are determined by the ranks of active bits of a mask (M) contained in the mask register; and
- a mask generator (14) generating a mask whose bits of rank 1 to i (i = 1, 2... n) are inactive and the remaining bits are active when a request of rank i is acknowledged by the linear encoder;
**characterized in that** it includes means (18, 20) for forcing to an active state selected bits of the masks (M) provided by the mask generator (14), and it provides said mask register (12).

2. The priority encoder of claim 1, **characterized in that** it includes means (40, 42, 44) for authorizing the loading of a mask in the mask register (12) only if the acknowledged request corresponds to the bits that are not forced to an active state of the masks.

3. The encoder of claim 1, **characterized in that** the mask register (12) includes an initialization input (S) that is enabled when the acknowledgment output (ACK) of the linear encoder (10) is at zero.

## Patentansprüche

1. Zirkularer Prioritätskodierer umfassend:
- einen linearen Prioritätskodierer (10), welcher eine Vielzahl von Anforderungen von Rang 1 bis n auf entsprechenden Anforderungsleitungen (RQM) empfängt und auf einer Bestätigungsausgabe (ACK) die Anforderung mit niedrigstem Rang unter den empfangenen Anforderungen bestätigt;
- ein Maskenregister (12), welches so verbunden ist, daß es zum linearen Kodierer (10) nur die Anforderungen überträgt, deren Ränge durch die Ränge aktiver Bits einer im Maskenregister enthaltenen Maske (M) bestimmt sind; und
- ein Maskengenerator (14) der eine Maske erzeugt, deren Bits von Rang 1 bis i (i=1,2,...n) inaktiv und deren übrige Bits aktiv sind, wenn eine Anforderung von Rang i vom linearen Kodierer bestätigt wird;
**dadurch gekennzeichnet, daß** er Mittel (18, 20) umfaßt, um einen aktiven Zustand ausgewählter Bits der vom Maskenerzeuger (14) bereitgestellten Maske (M) zu erzwingen und daß er das Maskenregister (12) bereitstellt.

2. Prioritätskodierer nach Anspruch 1, **dadurch gekennzeichnet, daß** er Mittel (40, 42, 44) umfaßt, die das Laden einer Maske in das Maskenregister (12) nur zulassen, wenn die bestätigte Anforderung denjenigen Bits entspricht, die nicht in einen aktiven Zustand der Masken gezwungen sind.

3. Kodierer nach Anspruch 1, **dadurch gekennzeichnet, daß** das Maskenregister (12) einen Initialisierungseingang (S) umfaßt, der aktiviert ist, wenn die Bestätigungsausgabe (ACK) des linearen Kodierers auf Null ist.
